# EUROPEAN PATENT SPECIFICATION

(11) **EP 0 584 942 B1**
(45) Date of publication and mention of the grant of the patent: **14.05.1997**
(21) Application number: 93305818.2
(22) Date of filing: 23.07.1993
(51) Int. Cl.: B60Q 1/115, B60Q 1/076

(54) **Headlamp levelling system**
Höhenregelungssystem für Scheinwerfer
Dispositif de réclage de niveau pour phare

(30) Priority: 24.07.1992 GB 9215809
(43) Date of publication of application: 02.03.1994
(73) Proprietor: NISSAN EUROPEAN TECHNOLOGY CENTRE LIMITED, Sunderland, Tyne & Wear SR5 3ND (GB)
(72) Inventor: Ahmed, Mahmoud, Buckingham Buckinghamshire MK18 7JH (GB)
(74) Representative: Waldren, Robin Michael

(56) References cited:
- EP-A- 0 138 217
- GB-A- 744 900
- GB-A- 996 905
- US-A- 4 833 573
- PATENT ABSTRACTS OF JAPAN vol. 8, no. 274 (M-345) (1711) 14 December 1984 & JP-A-59 143 731 (ICHIKO KOGYO KK)
- PATENT ABSTRACTS OF JAPAN vol. 7, no. 275 (M-261) (1420) 8 December 1983 & JP-A-58 152 641 (ICHIKOH KOGYO KK)

## Description

The present invention relates to a headlamp levelling system, particularly suited for the use in vehicles, which has a control circuit to drive a plurality of servo-motors for adjusting the angle of the headlamp units.

Vehicle headlamp levelling systems are becoming more common and may eventually be mandatory under the laws of many countries. They allow a driver to adjust the angle of a headlamp beam by eg. operating a multi-position switch. If, for example, a heavy load is placed in the rear of a vehicle, the vehicle body is caused to tilt so that the angle which the headlamp dipped beam makes with respect to the road is reduced. By operating the switch, the driver can compensate for this deviation.

A conventional headlamp levelling system comprises a servo-motor arrangement on each headlamp which causes the lamp assembly to tilt according to the position to which the switch is set.

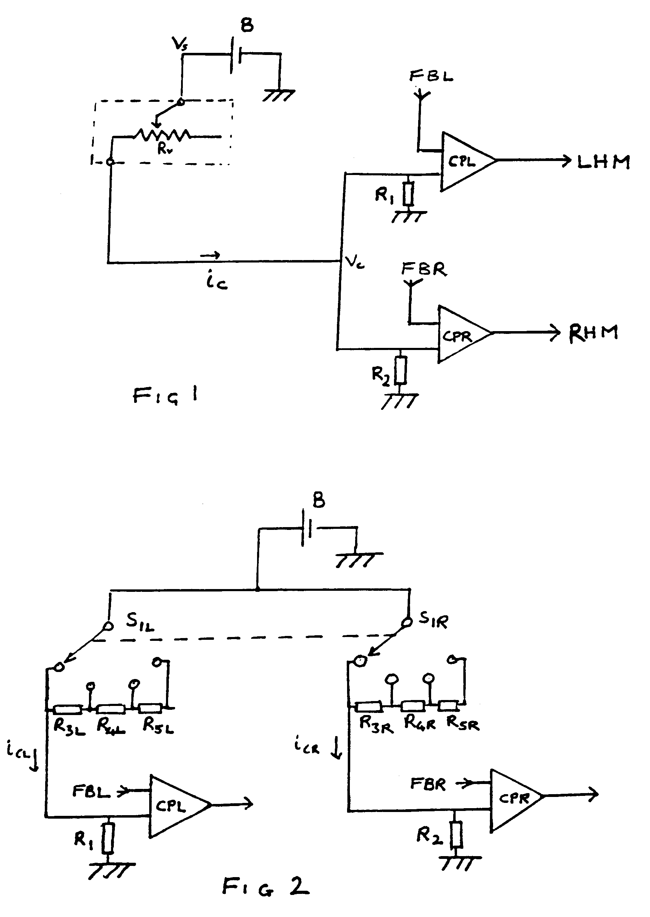

A standard switching arrangement for such a levelling system is shown in Figure 1 of the accompanying drawings. The left-hand motor (LHM) and right-hand motor (RHM) of the respective headlamps are driven by signals determined by respective left-hand and right-hand comparators CPL and CPR. The comparators receive respective feedback signals (FBL) and (FBR) from each motor at one input and an input control voltage Vc, derived from a vehicle battery B having a voltage Vs at their other (control) input.

The control voltage Vc is controlled by a potential divider comprising pull-down resistors R₁ and R₂ connecting the control input to ground and a common variable resistor Rᵥ connected to the vehicle battery B. Instead of a variable resistor, a chain of fixed resistors and a multi-way switch may be used.

It is important that the resistance values of R₁ and R₂ should be high in comparison to the maximum resistance of the variable resistor Rᵥ. In a typical system, the resistors R₁ and R₂ have a resistance in the order of 50K whilst the variable resistor Rᵥ is chosen to have a maximum resistance of less than 5K. Otherwise, if one of the left or right-hand comparator circuits goes open-circuit, the effect on the other will be significant, ie. the control voltage Vc will be significantly affected causing the headlamp in the other vehicle side to be levelled to an undesired position, which could cause a reduction in driver visibility or a hazard to oncoming traffic.

However, in practice this increased resistance value for R₁ and R₂ means that the control current i_{c} flowing to the control inputs of the comparators will only be a fraction of a milliamp, at most.

Such low magnitude currents are undesirable as they are particularly sensitive to minor resistance changes or disruptions in the electrical path through which they flow, for example due to minor changes in the contact condition in standard electrical connectors of the kind commonly used in automotive applications. Here, it should be realised that the variable resistor Rᵥ will usually be mounted behind the vehicle dash whilst the battery will usually be in the engine compartment and the comparators will often be in another part of the vehicle, eg. mounted immediately adjacent the headlamp levelling motors. Thus, there will nearly always be connectors in the i_{c} path.

Japanese patent application No. JP-A-59 143 731 describes a headlamp levelling system in which two potential dividers supply two respective control voltages to each of the comparators: an upper circuit control voltage and a lower limit control voltage. This arrangement enables unwanted oscillations within the circuit to be reduced or eliminated. However, this arrangement has the same disadvantages as described above, since high resistance values are required in the comparator circuits thereby minimising the control current.

One way of minimising this problem is to use special low-resitance connectors, eg. having gold- or silver-plated contacts. However, such a solution is unnecessarily expensive.

A better, lower cost solution to this technical problem has now been devised in accordance with the present invention which provides a headlamp levelling system having a control circuit for driving a plurality of servo-motors (LHM, LHR) together, the circuit comprising respective comparators (CPL, CPR) responsive to a variable control voltage derived from a reference source (B, S_{1L}, S_{1R}), wherein the reference source comprises a plurality of potential dividers for separately supplying the control voltage to the comparators (CPL, CPR), each potential divider comprising a pull-down resistor connected between an input of a comparator (CPL, CPR) and ground and also comprising a resistor chain connected to said input and to a multi-way switch having a common terminal for connection to a source voltage (B); the circuit being characterised in that the control voltage to each comparator (CPL, CPR) is supplied by a different one of said plurality of potential dividers.

Each potential divider may also comprise a resistor chain connected to the respective input and to a multi-way switch having a common terminal for connection to a source voltage. The multi-way switch of all the potential dividers are preferably ganged together.

In order to prevent unwanted oscillation or disruption of the headlamp movement as the switch is moved from one position to another, it is preferred that the multi-way switch should be of the make-before-break type.

An alternative embodiment of the present invention provides a headlamp levelling system according to claim 4 wherein all the multi-position variable resistors are ganged together.

All of the multi-position variable resistors are preferably ganged together.

Each respective potential divider and associated comparator may for convenience be considered as an arm of the control circuit. Conveniently, at least one of the arms so defined may comprise variable resistance means for compensating for variance in operation between respective said arms.

Although the control circuit may in principle be used with any two or more servo-motors, it is especially preferred for use with a pair of headlamp levelling motors.

The present invention will now be explained in more detail by the following description of a preferred embodiment and with reference to the accompanying drawings in which:-
Figure 1 shows a known headlamp level control circuit arrangement;
Figure 2 shows a control circuit of a levelling system according to the present invention;
Figure 3 shows a front view of a switch unit housing the ganged switch arrangement of the control circuit shown in Figure 2;
Figure 4 shows a cross-section through the front view of the switch unit shown in Figure 3;
Figure 5 shows a cross-section through a side view and Figure 5A shows a cross-section through an end-view of the switch unit shown in Figure 3;
Figures 6A-6D are contact diagrams showing interconnections of the switch contacts when in first-fourth positions;
Figure 7 is a wiring diagram of the switch contacts shown in Figures 6A-6D; and
Figure 8 shows another embodiment of control circuit of a levelling system according to the present invention.

Referring now to Figure 2, there is shown a control circuit of a headlamp levelling system according to the present invention. Those components which are the same as in Figure 1 are denoted by the same references.

Again, left and right comparators CPL and CPR have control inputs connected to ground via resistors R₁ and R₂ respectively. Their other inputs are respectively connected to receive feedback signals FBL and FBR from respective levelling motors.

The control input of the left-hand comparator is connected to the battery B via a chain of individual resistors R_{3L}-R_{5L}. The individual resistors in the chain are connected between terminals of a multi-way switch S_{1L} which can bypass all three resistors in the chain or selectively connect resistors R_{3L}, R_{3L}+R_{4L} or R_{3L}+R_{4L}+R_{5L} in series between the control input of the comparator CPL and the battery B.

A like chain of resistors R_{3R}-R_{5R} is connected between the battery and the control input of the right-hand comparator CPR via another multi-way switch S_{1R} in exactly the same way as switch S_{1L} interconnects resistors R_{3L}-R_{5L} with the battery and the control input of the left-hand comparator.

The two switches S_{1L} and S_{1R} are ganged so that substantially the same magnitude control voltage is applied to both the left and right-hand comparators in each switch position, the magnitude being variable upon operation of the ganged switches. However, since the control voltage applied to one comparator is derived via a different potential divider from that used to derive the control voltage applied to the other, if one of the comparator circuits goes open-circuit, it will not influence the control voltage fed to the control input of the comparator for the other headlamp. This means that lower resistance values may be chosen for the resistors R₁ and R₂, eg. 3KΩ and thus, optimum values of system operating currents may be adopted, ie. typically in the order of 3 to 10 milliamps.

As a result, the currents i_{CR} and i_{CL} flowing into the control inputs of each comparator may be significantly higher than the control current i_{c} in the previously known circuit of Figure 1 (in the order of a fraction of a milliamp). As a consequence, it is possible to use regular relatively inexpensive automotive-type connectors on the input circuits to the comparators, without detrimental effect or compromise to longer term reliability.

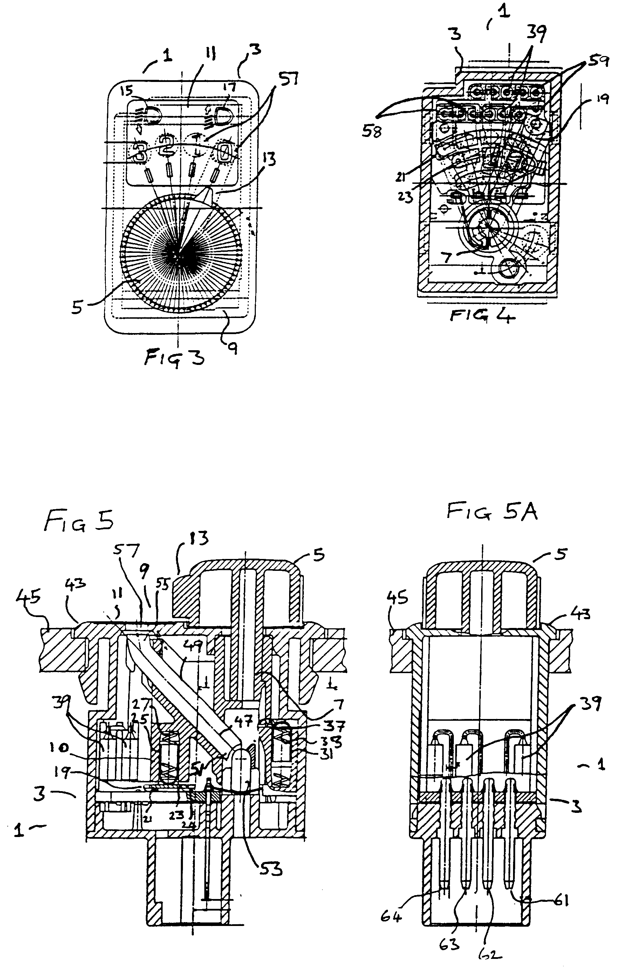

Details of the ganged switch unit S_{1L}, S_{1R} are shown in Figures 3-5A. The switch unit 1 comprises a moulded casing 3 provided with a rotary knob 5 integral with a spindle 7.

As can be seen particularly from Figure 3, the knob surrounds a facia 9 provided with an illuminated display 11. The display is marked with four switch positions (0)(1)(2)(3) indicated by a pointer 13, each switch position signifying a particular position of headlamp level. A pair of symbols 15, 17 respectively indicate headlamp movement down or up, according to the switch position.

As shown in Figures 4 and 5, the spindle 7 is fixed to a rotary wiper arm 10 which is provided with a wiper contact 19. The wiper contact 19 contacts, respectively, with left-hand and right-hand contacts 21, 23 and a common contact 24 arranged in concentric areas in wafer fashion beneath the wiper contact.

The wiper contact is urged against the common contact 24 and against the relevant left and right contacts by a nipple 25 under the downward bias of a compression spring 27 (refer to Figure 5). At the same time, a second nipple 31 is upwardly biased by a second compression spring 33, against a cam surface 37 on the underside of the knob. The cam surface is provided with a series of notches defining the switch positions as the knob is turned.

The left, and right contacts are provided with resistors 39 which terminate in external pins 61 and 62 (see Figure 5A) for connection to the rest of the circuit.

The pins 63 and 64 are the terminals for the battery B and a light source 53 (described below) respectively. The switch unit is provided with a flange 43 adjacent the facia for flush mounting on the vehicle dash 45.

Referring again to Figure 5, in this specific example, to assist the switch position to be read under the low intensity lighting conditions which usually pertain when the headlamps are in use, a light-pipe 47 is arranged in a slanted channel 49 within the knob assembly. The lower end 51 of the light pipe faces the light source 53 such as a bulb or LED. The upper end 55 of the light pipe faces a respective window 57 etc in the facia over which windows are respectively disposed the numerals (0)(1)(2)(3) denoting the switch positions.

As the knob is rotated, the channel and light pipe rotate with it, back-lighting the relevant numeral for the selected switch position.

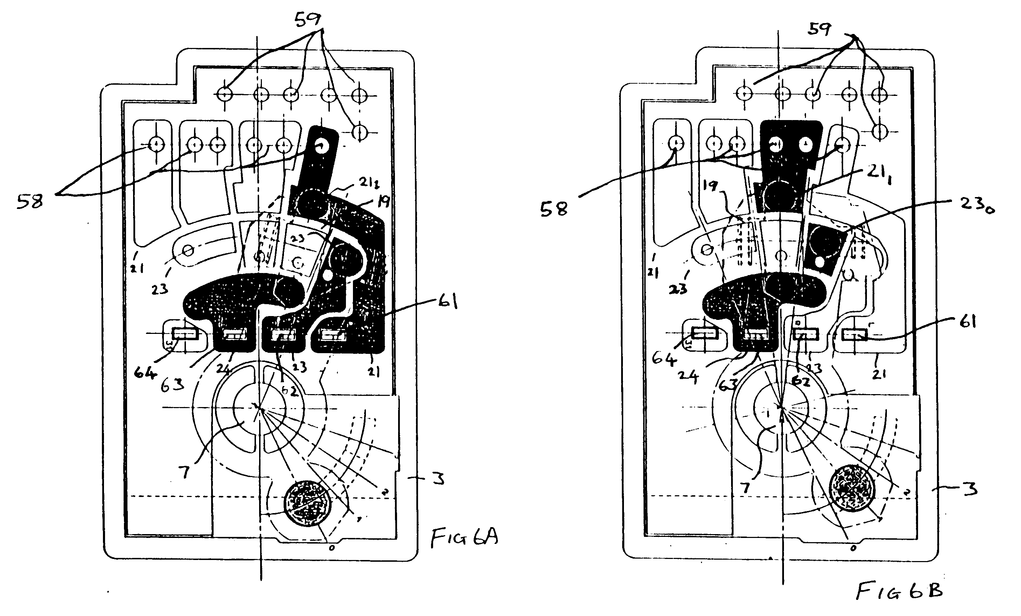

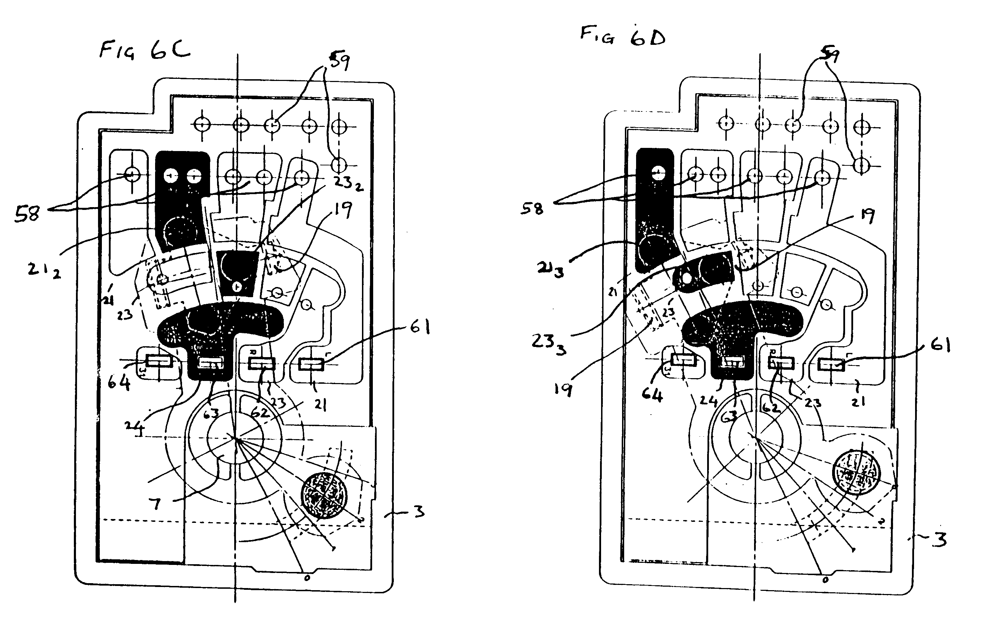

Operation of the switch will now be explained with reference to Figures 6A-6D and Figure 7. In these Figures, reference numerals 58 and 59 denote terminals which connect the individual resistors 39 in the chains for the left and right contacts 21 and 23 respectively.

The wiper contact 19 is shown in phantom. The dark areas are respectively the areas of the contacts electrically interconnected by the wiper arm in the various switch positions.

As shown in Figure 6A (corresponding to switch position (0)), the common contact 24 makes contact with first and second left and right contacts (21ₒ, 23ₒ) respectively. Figures 6B-6C show how progressive turning of the knob to positions (1), (2) and (3) respectively connects the common contact with the second, third and fourth left and right contacts (21₁, 23₁), (22₂, 23₂) and (22₃, 23₃).

However, it can be seen that the broad shape of the wiper contact in the vicinity of the left and right contacts means that the second left and right contacts will be connected to the common contact before contact is broken between the first left and right contacts and the common contact, and so on, across the range of switch positions.

This make-before-break function ensures that the total resistance of the potential divider connected to the control input of each comparator is never allowed to go infinitely high as would be the case if the common switch contacts are decoupled from all of the first to fourth switch contacts between the discrete positions of the control knob. Hence the headlamps cannot oscillate erroneously as the switch is moved from one position to the next.

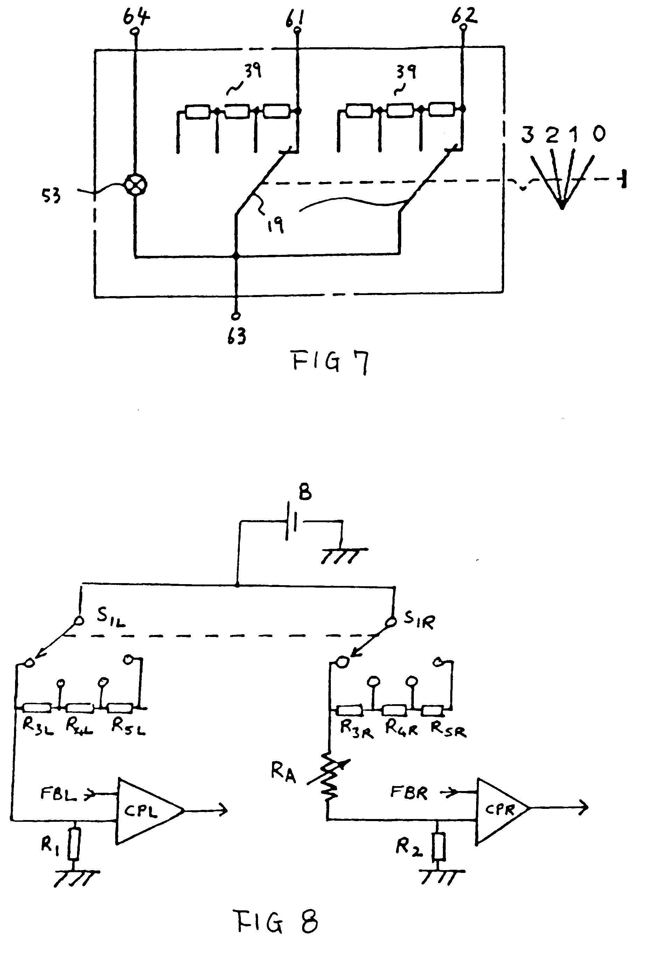

Figure 8 shows another embodiment of the control circuit. In this embodiment a variable resistor R_{A} is inserted in one of the potential dividers to the comparator circuit for adjusting any variance which might exist between the left-hand and right-hand headlamp levelling units due to, possibly, mechanical errors in the motor drive or linkage arrangements for actuating the levelling units.

Where such a variance exists, even if the resistance values for each potential divider are set precisely, it may still cause inconsistency in the angle of the headlamp beam between the left-hand and right-hand units. This variable resistor allows a driver or service personnel to correct such inconsistency by eg. turning a control knob or trim screw provided on the dash-board or in the engine compartment for adjusting the value of the variable resistor. As is apparent, such an adjustment means or a variable resistor can also be provided in both left-hand and right-hand comparator circuits.

In the light of this disclosure, modifications of the described embodiment as well as other embodiments, all within the scope of the present invention as defined by the appended claims, will now be apparent to persons skilled in the art.

## Claims

1. A headlamp levelling system having a control circuit for driving a plurality of servo-motors (LHM, LHR) together, the circuit comprising respective comparators (CPL, CPR) responsive to a variable control voltage derived from a reference source (B, S_{1L}, S_{1R}), wherein the reference source (B, S_{1L}, S_{1R}) comprises a plurality of potential dividers for separately supplying the control voltage to the comparators (CPL, CPR), each potential divider comprising a pull-down resistor (R₁, R₂) connected between an input of a comparator (CPL, CPR) and ground and also comprising a resistor chain (R_{3L}-R_{5L}, R_{3R}-R_{5R}) connected to said input and to a multi-way switch (S_{1L}, S_{1R}) having a common terminal for connection to a source voltage (B); the circuit being characterised in that the control voltage to each comparator (CPL, CPR) is supplied by a different one of said plurality of potential dividers.

2. A headlamp levelling system according to claim 1, wherein the multi-way switch of all potential dividers are ganged together.

3. A headlamp levelling system according to claim 1, further characterised in that each said multi-way switch (s_{1L}, S_{1R}) is a make-before-break switch.

4. A headlamp levelling system having a control circuit for driving a plurality of servo-motors (LHM, LHR) together, the circuit comprising respective comparators (CPL, CPR) responsive to a variable control voltage derived from a reference source (B, S_{1L}, S_{1R}), wherein the reference source (B, S_{1L}, S_{1R}) comprises a plurality of potential dividers for separately supplying the control voltage to the comparators (CPL, CPR), each potential divider comprising a pull-down resistor (R_{1,} R₂) connected between an input of a comparator (CPL, CPR) and ground and also comprising a multi-position variable resistor connected between said input and a terminal for receiving a source voltage (B); the circuit being characterised in that the control voltage to each comparator (CPL, CPR) is supplied by a different one of said plurality of potential dividers.

5. A headlamp levelling system according to claim 4 wherein all the multi-position variable resistors are ganged together.

6. A headlamp levelling system according to any preceding claim, further characterised in that the potential dividers are arranged to provide a system operating current in the order of from 3 mA to 10 mA.

7. A headlamp levelling system according to any preceding claim, further characterised in that each potential divider and its respective associated comparator (CPL, CPR) comprises a respective arm of said control circuit, at least one of said arms comprising variable resistance means (R_{A}) for compensating for variance in operation between said arms.

8. A headlamp levelling system according to any preceding claim, further characterised by being connected to a pair headlamp levelling motors.

## Patentansprüche

1. Höhenregelungssystem für Scheinwerfer, das eine Steuerschaltung für das Steuern einer Vielzahl von Stellmotoren (LHM, LHR) miteinander aufweist, wobei die Schaltung die entsprechenden Vergleichseinrichtungen (CPL, CPR) aufweist, die auf eine regelbare Steuerspannung ansprechen, die von einer Bezugsquelle (B, S_{1L}, S_{1R}) abgeleitet wird, wobei die Bezugsquelle (B, S_{1L}, S_{1R}) eine Vielzahl von Spannungsteilern für das separate Zuführen der Steuerspannung zu den Vergleichseinrichtungen (CPL, CPR) aufweist, und wobei jeder Spannungsteiler aufweist: einen Ableitwiderstand (R₁, R₂), der zwischen einen Eingang einer Vergleichseinrichtung (CPL, CPR) und der Erde geschaltet ist; und ebenfalls eine Widerstandskette (R_{3L}-R_{5L}, R_{3R}-R_{5R}), die mit dem Eingang und einem Vielfachschalter (S_{1L}, S_{1R}) verbunden ist, der eine gemeinsame Klemme für den Anschluß an eine Quellenspannung (B) aufweist; wobei die Schaltung dadurch gekennzeichnet wird, daß die Steuerspannung zu jeder Vergleichseinrichtung (CPL, CPR) von einem anderen aus der Vielzahl der Spannungsteiler zugeführt wird.

2. Höhenregelungssystem für Scheinwerfer nach Anspruch 1, bei dem die Vielfachschalter aller Spannungsteiler miteinander gleichlaufend abgestimmt sind.

3. Höhenregelungssystem für Scheinwerfer nach Anspruch 1, weiterhin dadurch gekennzeichnet, daß jeder Vielfachschalter (S_{1L}, S_{1R}) ein Folgeumschalter ist.

4. Höhenregelungssystem für Scheinwerfer, das eine Steuerschaltung für das Steuern einer Vielzahl von Stellmotoren (LHM, LHR) miteinander aufweist, wobei die Schaltung die entsprechenden Vergleichseinrichtungen (CPL, CPR) aufweist, die auf eine regelbare Steuerspannung ansprechen, die von einer Bezugsquelle (B, S_{1L}, S_{1R}) abgeleitet wird, wobei die Bezugsquelle (B, S_{1L}, S_{1R}) eine Vielzahl von Spannungsteilern für das separate Zuführen der Steuerspannung zu den Vergleichseinrichtungen (CPL, CPR) aufweist, und wobei jeder Spannungsteiler aufweist: einen Ableitwiderstand (R₁, R₂), der zwischen einen Eingang einer Vergleichs-einrichtung (CPL, CPR) und der Erde geschaltet ist; und ebenfalls einen Mehrpunktstellwiderstand, der zwischen dem Eingang und einer Klemme für das Empfangen einer Quellenspannung (B) geschaltet ist; wobei die Schaltung dadurch gekennzeichnet wird, daß die Steuerspannung zu jeder Vergleichseinrichtung (CPL, CPR) von einem anderen aus der Vielzahl der Spannungsteiler zugeführt wird.

5. Höhenregelungssystem für Scheinwerfer nach Anspruch 4, bei dem alle Mehrpunktstellwiderstände miteinander gleichlaufend sind.

6. Höhenregelungssystem für Scheinwerfer nach einem der vorhergehenden Ansprüche, weiterhin dadurch gekennzeichnet, daß die Spannungsteiler angeordnet sind, um einen Systembetriebsstrom in der Größenordnung von 3 mA bis 10 mA zu liefern.

7. Höhenregelungssystem für Scheinwerfer nach einem der vorhergehenden Ansprüche, weiterhin dadurch gekennzeichnet, daß jeder Spannungsteiler und seine entsprechende zugeordnete Vergleichseinrichtung (CPL, CPR) eine entsprechende Abzweigung der Steuerschaltung aufweist, wobei mindestens eine der Abzweigungen eine Stellwiderstandseinrichtung (R_{A}) für das Ausgleichen der Abweichung beim Betrieb zwischen den Abzweigungen aufweist.

8. Höhenregelungssystem für Scheinwerfer nach einem der vorhergehenden Ansprüche, weiterhin dadurch gekennzeichnet, daß es mit einem Paar Höhenregelungsmotoren für Scheinwerfer verbunden ist.

## Revendications

1. Système de mise à niveau de phare de véhicule ayant un circuit de commande pour entraîner ensemble plusieurs servomoteurs (LHM, LHR), le circuit comprenant des comparateurs correspondants (CPL, CPR) réagissant à une tension de commande variable dérivée d'une source de référence (B, S_{1L}, S_{1R}), où la source de référence (B, S_{1L}, S_{1R}) comprend plusieurs diviseurs de tension pour amener séparément la tension de commande aux comparateurs (CPL, CPR), chaque diviseur de tension comprenant une résistance de polarisation à la masse (R₁, R₂) connectée entre une entrée d'un comparateur (CPL, CPR) et la masse, et comprenant également une chaîne de résistances (R_{3L}-R_{5L}, R_{3R}-R_{5R}) connectée à ladite entrée et à un commutateur multivoie (S_{1L}, S_{1R}) ayant une borne commune pour la connexion à une tension de source (B); le circuit étant caractérisé en ce que la tension de commande à chaque comparateur (CPL, CPR) est fournie par un diviseur de tension différent faisant partie desdits diviseurs de tension.

2. Système de mise à niveau de phare selon la revendication 1, dans lequel le commutateur multivoie de tous les diviseurs de tension comporte une commande unique.

3. Système de mise à niveau de phare selon la revendication 1, caractérisé en outre en ce que chacun desdits commutateurs multivoie (S_{1L}, S_{1R}) est un commutateur du type à chevauchement.

4. Système de mise à niveau de phare ayant un circuit de commande pour entraîner ensemble plusieurs servomoteurs (LHM, LHR), le circuit comprenant des comparateurs correspondants (CPL, CPR) réagissant à une tension de commande variable dérivée d'une source de référence (B, S_{1L}, S_{1R}), où la source de référence (B, S_{1L}, S_{1R}) comprend plusieurs diviseurs de tension pour amener séparément la tension de commande aux comparateurs (CPL, CPR), chaque diviseur de tension comprenant une résistance de polarisation à la masse (R₁, R₂) connectée entre une entrée d'un comparateur (CPL, CPR) et la masse et comprenant également une résistance variable à positions multiples connectée entre ladite entrée et une borne pour recevoir une tension de source (B); le circuit étant caractérisé en ce que la tension de commande à chaque comparateur (CPL, CPR) est fournie par un diviseur de tension différent faisant partie des différents diviseurs de tension.

5. Système de mise à niveau de phare selon la revendication 4, dans lesquel toutes les résistances variables à positions multiples sont à commande unique.

6. Système de mise à niveau de phare selon l'une quelconque des revendications précédentes, caractérisé en outre en ce que les diviseurs de tension sont disposés pour fournir un courant de commande du système de l'ordre de 3 mA à 10 mA.

7. Système de mise à niveau de phare selon l'une quelconque des revendications précédentes, caractérisé en outre en ce que chaque diviseur de tension et son comparateur associé correspondant (CPL, CPR) comprend une branche correspondante dudit circuit de commande, au moins l'une desdites branches comprenant des moyens à résistance variable (R_{A}) pour compenser la variation en fonctionnement entre lesdites branches.

8. Système de mise à niveau de phare selon l'une quelconque des revendications précédentes, caractérisé en outre en ce qu'il est connecté à une paire de moteurs de mise à niveau de phare.
